# NEW EUROPEAN PATENT SPECIFICATION

(11) **EP 1 324 913 B2**
(45) Date of publication and mention of the opposition decision: **23.11.2011**
(45) Mention of the grant of the patent: 03.01.2007
(21) Application number: 00975007.6
(22) Date of filing: 19.10.2000
(51) Int. Cl.: B62M 23/02, B62M 25/08

(54) **METHOD AND DEVICE FOR MEASURING THE EFFORT MADE BY A CYCLIST**
VERFAHREN UND VORRICHTUNG ZUM MESSEN DER ANSTRENGUNG EINES RADFAHRERS
PROCEDE ET DISPOSITIF DE MESURE DE L'EFFORT FOURNI PAR UN CYCLISTE

(30) Priority: 28.09.2000 NL 1016294
(43) Date of publication of application: 09.07.2003
(73) Proprietor: Accell Group N.V., 8444 AR Heerenveen (NL)
(72) Inventor: ROOVERS, Gijsbertus, Cornelis, Franciscus, NL-5052 BA Goirle (NL); D'HERRIPON, Bastiaan, Andreas, NL-5051 NN Goirle (NL)
(74) Representative: Hatzmann, Martin
(86) International application number: PCT/NL2000/000757
(87) International publication number: WO 2001/030643

(56) References cited:
- EP-A- 0 831 021
- EP-A1- 0 983 934
- WO-A1-99/45350
- DE-A- 19 741 709
- DE-A1- 3 813 681
- JP-A- 10 274 575
- US-A- 5 016 478
- PATENT ABSTRACTS OF JAPAN vol. 1997, no. 11, 28 November 1997 (1997-11-28) & JP 09 175476 A (HONDA MOTOR CO LTD), 8 July 1997 (1997-07-08)
- PATENT ABSTRACTS OF JAPAN vol. 1997, no. 02, 28 February 1997 (1997-02-28) & JP 08 268372 A (TOKYO R &D:KK), 15 October 1996 (1996-10-15)
- PATENT ABSTRACTS OF JAPAN vol. 016, no. 339 (M-1284), 22 July 1992 (1992-07-22) & JP 04 100790 A (YAMAHA MOTOR CO LTD), 2 April 1992 (1992-04-02)
- PATENT ABSTRACTS OF JAPAN vol. 1996, no. 09, 30 September 1996 (1996-09-30) & JP 08 113185 A (OKAMURA KENKYUSHO:KK;POWER SYST:KK; JEOL LTD), 7 May 1996 (1996-05-07)

## Description

The present invention relates in particular to the measurement of a force exerted by a cyclist, but the present invention is more widely applicable.

In a first aspect, the present invention relates in general terms to the measurement of a force or torque which is exerted by a cyclist, as a measure of the effort made by that cyclist. Measurement data of this nature is generally already of use when athletes are training, possibly in combination with heart rate measurements. Furthermore, this measurement data can be used to control, inter alia, automatic acceleration systems. Automatically changing acceleration systems for bicycles are already known. Therein, the rotational speed of the crank system is always used as the exclusive information source for determining the moment of changing. However, this does not lead to optimum changing, since the pedalling speed is not always a good indication of the effort being made by the cyclist. Better determination of the moment of changing can be achieved by using both the pedalling speed and the pedalling force as information sources.

However, there is a need in particular for a measurement as mentioned above in the field of electrically assisted vehicles, i.e. vehicles which are provided with an electric drive motor, the driving force supplied by the electric driving motor being proportional to the effort made by the driver. Therefore, in the following, the present invention will be explained specifically for this application field, more particularly the field of electrically assisted bicycles.

Vehicles which are driven by human force are generally known, and the bicycle is the most common application thereof. As is known, a bicycle comprises a frame and a crank system rotatably mounted in the frame, with a substantially horizontally oriented crank and two crank arms which are mounted at the respective ends of the said crank, are perpendicular to the crank and are provided with pedals at their respective ends. The rider of the bicycle uses his feet to set the crank system in rotation with respect to the frame, and this rotation is transmitted, usually by means of sprockets and a chain, to at least one of the wheels of the bicycle, usually the rear wheel. The pedalling force exerted by the rider is translated, via the lever action of the crank arms, into a driving moment or driving torque in the crank and, via the said transmission system, to the driven wheel.

In general, there is a need for auxiliary force means which enable the rider of the bicycle to achieve the same performance with reduced effort, such as when cycling into the wind or uphill. Bicycles which are provided with auxiliary force means of this nature are already known per se and, in the context of the present invention, will be referred to by the term "electrically assisted bicycle". With bicycles of this type, an electric motor is provided, which is coupled to the crank system or the wheels, is powered from a battery and is actuated by a control member, for example a suitably programmed microprocessor or the like. The actuation by the control member is generally dependent on the speed of the bicycle and on the force exerted by the rider. If the rider is not exerting any force on the pedals, the electric motor does not emit any power. If the rider is exerting a force on the pedals, the electric motor does provide an auxiliary force. The characteristics of the auxiliary force, that is to say the ratio between the auxiliary force and the human force as a function of the human force and of the speed, can in principle be programmed as desired; usually, the said ratio is constant until a certain speed threshold is reached, and then decreases to zero above this speed threshold. Consequently, the objective cycling performance, such as speed, will still be dependent on the level of effort made by the cyclist, but this effort will be considerably less than if the auxiliary source of force were absent.

In order to be able to actuate the electric motor with a variable power depending on the pedalling force provided by the rider, it is necessary for the control member to be provided with a pedalling-force sensor which is able to measure the pedalling force provided by the rider or at least to generate a signal which is representative of this pedalling force. Various proposals for such pedalling-force sensors have been made in the prior art. American patent 5.915.493 describes a complicated mechanical structure for measuring the pedalling torque in the crank system. This mechanical structure comprises a planetary system with a sun gear to which a spring-loaded lever is attached. When a pedalling force is exerted, the sun gear will turn a little, counter to the spring force, and the extent of rotation of the said sun gear is a measure of the force supplied by the rider. However, this known system is complicated, large and heavy. It requires gears and bearings as well as a closed housing and a large number of moving components, making the system heavy and expensive. Furthermore, friction occurs in the system, with the result that there is a reduction in effective pedalling force and undesirable noise is produced. Furthermore, the fact that hysteresis effects occur in the system is a fundamental drawback to measuring the reaction torque of a sun gear. On account of the necessary depression of a spring for the actuation of a potentiometer, the reaction time of the torque-measuring system will show a delay compared to a crank system without such a spring, with the result that both the cycling sensation and the control signal to the control unit deteriorate. Moreover, there is a need for a force-measuring system which can easily be arranged on "ordinary" bicycles, i.e. bicycles which are not provided with an auxiliary power source; the system known from the said publication is not suitable for this purpose.

American patent 5.027.303 describes a measuring system in which the crank and/or the sprocket is provided with strain gauges. A significant drawback of this system is that the sensor is connected to the moving components of the crank system, while the control member is attached to the stationary frame, such that it is relatively complicated to transmit the measurement signal to the control member. The design with carbon brushes proposed in the publication takes up space, increases the risk of noise in the signal and gives rise to contamination.

Furthermore, systems which are based on measuring the tension in the chain, in which the tension force in the chain acts on a spring-preloaded lever, have been proposed. Therein, the position of the lever is a measure of the force in the chain. This system too is fragile, liable to damage, susceptible to wear and contamination and, moreover cannot be used in combination with a derailleur system.

Moreover, all the known systems have the drawback of reacting only to the driving torque generated in the drive line. This has two main drawbacks. Firstly, these systems are unable to measure the direction in which the force is exerted, and also can not distinguish between forces which are exerted by the left leg or the right leg. Secondly, these systems do not react to the actual force exerted by the rider. After all, if the direction of the force exerted by the rider runs through the axis of rotation of the crank system, for example if a pedal is situated in the vicinity of its uppermost position, the driving force will be low or even zero, while the force exerted may be considerable.

It is a common feature of all the known sensor systems described above that they are based on carrying out a measurement on one or more moving components in the drive line.

Japanese patent publication 1996-268.372 describes a bicycle in which a pedalling force is measured by measuring a deformation of the bicycle frame. However, in this known system at two locations, namely the left-hand and right-hand seat stays, the strain occurring there is measured, and the pedalling force is measured by subtracting the two measured changes in length from one another. However, the measured changes in length occur not only as a result of pedalling force but also, for example, when cornering. To be able to correct for this problem, this known system requires two correction sensors on either side of the horizontal upper frame tube of the bicycle frame. All in all, this known system requires four sensors. This large number of sensors makes this known system relatively expensive.

It is therefore worthwhile to use a smaller number of sensors, and preferably only a single sensor, to generate a deformation signal which in a reliable way is a measure of the effort supplied by the cyclist, see JP-A-09-175 476 from which it is known to measure the pedal force in terms of its force acting on a bearing of the pedal crank shaft.

US5016478 discloses electric strain gages on an end of a wheel spindle.

The invention provides a method for controlling an auxiliary motor of a bicycle, defined by claim 1 and alternatively by claim 5.

Depending on the position on the frame, the deformation to be measured will be a bending, a turning or a combination thereof. It will be clear to a person skilled in the art how the deformation detectors used, for example strain gauges, should be arranged at the measurement location so that the deformation detectors respond to the desired extent to deformation caused by bending or turning.

In a second aspect, the present invention relates to a bicycle, see claim 8.

In a third aspect, the present invention relates to a system for measuring a driving force in a chain of a bicycle, see claim 21.

A system of this type can be used in particular in a vehicle which is driven by human force, where it may be desirable to have means for measuring the driving force prevailing in the transmission system, as a measure of the effort supplied by the driver. This requirement too relates in particular, to the field of electrically assisted vehicles.

Hereinafter, this aspect of the present invention will also be explained specifically for the application example of an electrically assisted bicycle.

In the application example of an electrically assisted bicycle which is to be discussed below, it is assumed that the bicycle is driven by means of a bicycle chain which is fitted around two gearwheels, one of which is mounted on a crank while the other is mounted on the rear wheel. However, the invention can also be applied to vehicles, including bicycles, in which the force-transmitting member is designed as a belt, strap, cord, etc.

The present invention aims to provide a simplified measuring system in which the chain force is measured with the aid of a sensor which is fixedly mounted on the bicycle frame or on a component fixed to the bicycle frame.

This aspect of the present invention, too, is based on the insight that a tension which prevails in the chain leads to reactive forces in the stationary components of a bicycle, and that these reactive forces then lead to deformations of the frame or to deformation of one or more components which are securely attached to the said frame.

The present invention will be explained in more detail by the following description with reference to the drawing, in which identical reference numerals denote identical or similar components, and in which:
figure 1A diagrammatically shows a side view of a bicycle; figure 1B diagrammatically shows a side view of an electrically assisted bicycle;
figure 2 shows a block diagram of an electric circuit;
figures 3A-B diagrammatically show vertical sections through a bicycle;
figures 4A-E are graphs illustrating measurement results from a test;
figures 5A-C are also graphs illustrating measurement results of a test
figures 6A-B illustrate a bicycle with a separate bottom bracket;
figure 7 diagrammatically shows a few components of a drive system of a bicycle;
figure 8 shows a diagrammatic plan view of a rear axle of a bicycle, provided with a hub motor and an instrumented rotary bearing, in accordance with the present invention;
figure 9A diagrammatically shows a cross section through an instrumented rotary bearing according to the present invention; figure 9B diagrammatically shows an example of a section of the measurement signal generated by such an instrumented rotary bearing;
figure 10A diagrammatically shows a cross section, similar to figure 9A, through a rotary bearing which has been modified in accordance with the present invention; figure 10B diagrammatically shows an example similar to figure 9B of a section of the measurement signal generated by a modified,rotary bearing of this type;
figure 11 diagrammatically shows a plan view, similar to figure 8, of a rear axle of a bicycle, provided with a hub motor and a bending sensor according to the present invention;
figure 12 diagrammatically shows an example similar to in figure 10B of a section of the measurement signal generated by a bending sensor of this type. Figure 1B, 2, 3A, 3B, 6A and 6B do not show embodiments exactly according to the claimed invention.

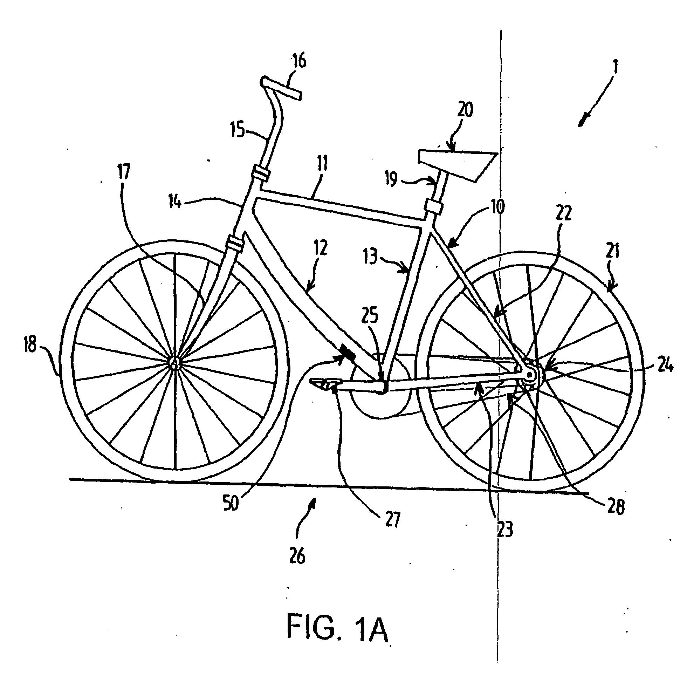

Figure 1A diagrammatically shows a side view of a bicycle 1 with a frame 10, which frame 10 comprises an upper frame tube 11, a lower frame tube 12 and a saddle tube 24, which are attached to one another in the customary triangular configuration, with the upper frame tube 11 substantially horizontally oriented. The upper frame tube 11 and the lower frame tube 12 meet one another at a handlebar tube 14 in which a handlebar pin 15 is rotatably mounted. At its top end, the handlebar pin 15 is provided with handlebars 16, while at its bottom end it is attached to a front fork 17 in which a front wheel 18 is mounted.

In the saddle tube 13, there is arranged a saddle pin 19 which at its top end bears a saddle 20.

To support a rear wheel 21, the frame 10 comprises a rear fork 22 and a rear frame tube 23. The rear fork 22 extends from a top end of the saddle tube 13 to a hub 24 for the rear wheel 21, and the rear frame tube 23 extends between the hub 24 and a bottom end of the saddle tube 13.

The bottom end of the saddle tube 13 and the bottom end of the lower frame tube 12 meet one another at a bottom bracket 25 of the frame 10. The bottom bracket 25 is a cylindrical space, the centre axis of which is substantially horizontally oriented, at right angles to the longitudinal direction of the bicycle 1, and in which a crank (which is not shown in this figure for the sake of simplicity) of a crank system 26 is rotatably mounted. Crank arms which are oriented at right angles to the crank and are provided at their respective ends with pedals 27, only one of which is illustrated in figure 1A, are mounted at the two ends of the crank. Rotation of the crank is transmitted to the rear wheel 21 by means of a chain 28, via gearwheels which are not shown for the sake of simplicity.

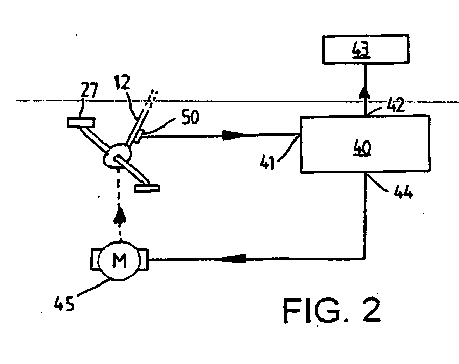

Figure 2 is a block diagram which shows a signal-processing unit 40, with an input 41 for connecting thereto a sensor 50, which can provide the signal-processing unit 40 with a signal which is representative of the pedalling force exerted by a rider of the bicycle 1. The signal-processing unit 40 can process such a signal in various ways. For example, it may be of interest for sportsmen to record the pedalling frequency and/or the mean pedalling frequency, the power delivered, efficiency of the pedalling movement, etc, and for this purpose the relevant data can be derived, by a suitable signal-processing operation which is known per se and is carried out by the signal-processing unit 40, from the cyclical signal received at the input 41 and, for example at an output 42, can be provided to a display 43 or the like.

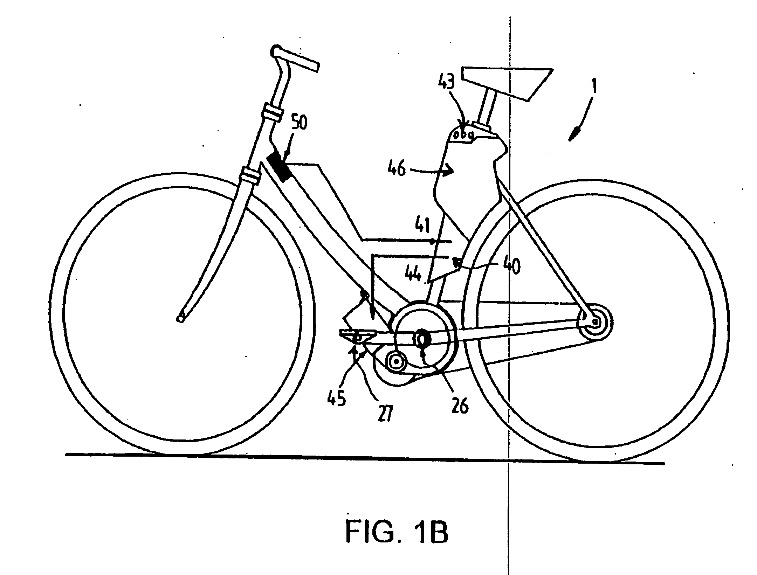

It is also conceivable, as illustrated in figure 1B, that the bicycle 1 is an electric bicycle provided with an electric motor 45 which is powered from a battery 46 and is coupled to the crank system 26 in order to provide an auxiliary force to the crank system 26. The electric motor 45 is under the control of the signal-processing unit 40, which for this purpose, at its control output 44, emits suitable control signals to the electric motor 45. The signal-processing unit 40 is designed to make the level of the auxiliary force generated by the electric motor 45 dependent on the level of the pedalling force exerted on the pedals 27 by the rider. Therefore, the control signal for the electric motor 45 generated by the signal-processing unit 40 at its control output 44 is dependent, in a predetermined manner, on the input signal received at its detection input 41. The signal-processing unit 40 can use an intelligent control arrangement, in which the control characteristic is adapted to a rider profile on the basis of pedalling frequency, cycling speed, etc. For this purpose further sensors may be coupled to the signal-processing unit 40, if appropriate.

Since signal-processing units for processing such an input signal and actuating an electric motor in a predetermined manner are known per se, for example in the form of a suitably programmed microprocessor, the way in which the signal-processing unit 40 operates will not be explained in more detail here. It is sufficient to point out that in general the control characteristic is such that, where the conditions remain otherwise unchanged, the electric motor provides more force as the force measured increases.

According to the prior art, a sensor 50 is coupled in one way or another to moving components of the bicycle 1, such as the crank system 26 or the chain 28. However, according to the present invention the sensor 50 is coupled to the frame 10 for the purpose of measuring the deformation of the frame 10 as a consequence of the pedalling force exerted by the rider.

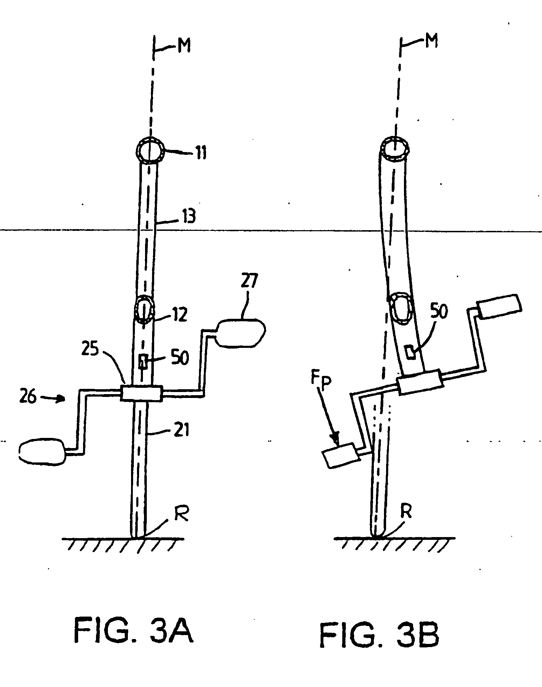

Figures 3A and 3B illustrate this measurement principle. Figure 3A is a vertical cross section through the frame 10 of the bicycle 1 in an at-rest position thereof. The point of contact of the rear wheel 21 on the ground is indicated by the letter R. For the sake of simplicity, components such as handlebars and saddle have been omitted from this figure. The bicycle is substantially symmetrical with respect to a centre plane M. The symmetrical bicycle frame has a neutral line which generally lies in the plane of the frame and runs from the clamping of the rear hub to the steering-head tube. A pedalling force exerted on a pedal 27 is denoted by the letter Fₚ. The pedalling force Fₚ of the cyclist lies outside the said plane and crosses the neutral line. Consequently, a moment of torsion is generated and the frame 10 will be deformed with respect to the wheels 18 and 21 resting on the ground, as shown in exaggerated form in figure 3B. More particularly, the frame twists about the neutral line and the top and bottom frame tubes are subjected to turning. The level of the deformation is a measure of the pedalling force exerted by the cyclist.

The extent of deformation will be dependent, inter alia, on the material used for the frame 10, the shape and dimensions of the tubes used in the frame 10, etc. The state of deformation will not be the same in all the tubes. In general, it can be stated that the deformation of the saddle tube 13 will substantially be a state of bending, while the deformation in the bottom frame tube 12 will substantially be a state of torsion. This deformation of the frame 10 can be measured successfully and has been found to be a good representation of the force exerted. Therefore, it is proposed that the bending of the frame 10 be measured with the aid of the sensor 50 and that the measurement signal obtained in this way be used as input signal for the signal-processing unit 40.

In principle, a certain amount of deformation will occur in each component of the frame 10, so that the sensor 50 may in principle be mounted at any desired position of the frame 10. A position which has proven particularly suitable in a test arrangement is the underside of the bottom frame tube 12, in the vicinity of its bottom end, as illustrated in figures 3A and 3B, for measuring the turning which occurs in the bottom frame tube 12. Moreover, this position can be successfully combined with a positioning of a signal-processing unit 40 close to the motor 45. Another position which offers practical advantages is a position in the vicinity of the top end of the bottom frame tube 12: in this case, it is possible to mount a switch on the frame tube for the purpose of switching the electrical assistance system on and off and to mount the sensor 50 beneath this switch, so that the switch protects the sensor from damage.

At the bottom end of the bottom frame tube 12, predominantly turning will take place. A sensor which is to be placed here will therefore primarily have to be sensitive to turning of the frame tube. Positioning strain gauges in such a manner that they are predominantly sensitive to turning is a generally known technique and will not be explained in further detail.

At the bottom end of the saddle tube 13, predominantly bending will take place. A sensor which is to be positioned here will therefore have to be predominantly sensitive to bending of the frame tube. Positioning strain gauges in such a manner that they are predominantly sensitive to bending is a generally known technique and will not be explained in further detail.

However, it is noted that deformation will also occur in other sections of the frame 10, and the same applies to components which are securely connected to the frame 10, such as for example the handlebar pin 15 and the saddle pin 19. The reactive force exerted on the handlbars 16 by the cyclist will predominantly be directed horizontally forwards, so that primarily bending will occur in the handlebar pin 15. The reactive force exerted on the saddle 20 by the cyclist will predominantly be directed horizontally backwards, so that predominantly bending will likewise occur in the saddle pin 19.

In a design variant, it is possible for the sensor 50 and the signal-processing unit 40 to be integrated on a single chip. Furthermore, it is then possible that other functions, such as an identification number of the bicycle, are integrated in such a chip.

In another design variant, the sensor 50 is designed as a sticker with integrated strain gauges. Such a sticker is particularly easy to attach to the frame of a bicycle.

An important advantage is that the sensor 50 creates a measurement signal even if the direction of the pedalling force Fₚ intersects the axis of rotation of the crank system 25, for example when a pedal 27 is in its highest position, so that the rider can still gain auxiliary force from the electric motor 45. In the known electrically assisted bicycles this is not the case, or is the case to a much lesser extent, since the driving force in the drive line is highly dependent on the position of the pedals, and consequently it can happen that the desired support remains absent even when the pedalling force is high. By contrast, according to the present invention, the sensor signal is to a large degree proportional to the force exerted by the rider, irrespective of the position of the pedals, so that it is therefore always possible to offer more auxiliary electrical force when the rider, for whatever reason and under whatever conditions, exerts more force.

The sensor 50 may be of any suitable type which is suitable for measuring the deformation of a structural component. In a test arrangement, a sensor based on strain gauges has proven very successful, but other types of sensors, such as piezo elements, capacitive sensors, etc, will also satisfy the requirements, as will be clear to a person skilled in the art.

Since it will be clear to a person skilled in the art how a sensor 50 comprising one or more strain gauges should be arranged on a component of the frame 10 in order to successfully measure the deformation occurring therein, this will not be explained in more detail here. Nor will the way in which the signals from individual strain gauges in a sensor comprising a plurality of strain gauges can be combined with one another to obtain an optimum measurement signal be explained here, since this is part of general knowledge.

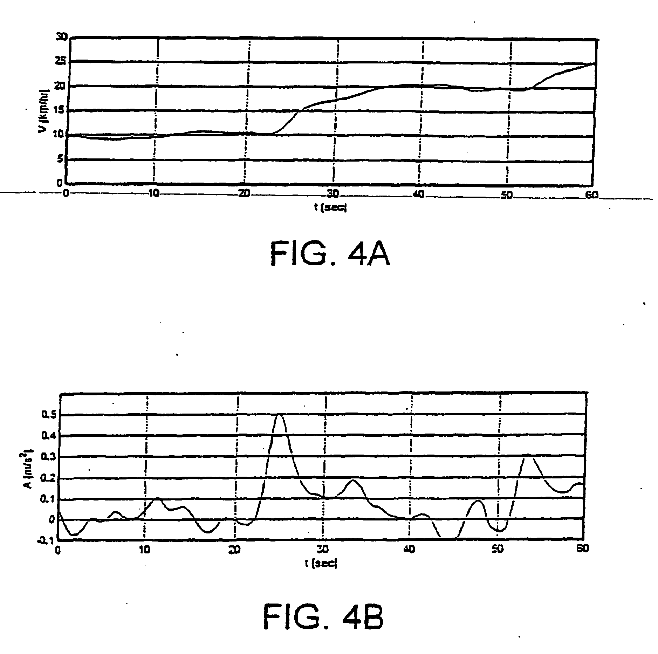

Figures 4A-E illustrate that the measurement signal obtained in this way from the measurement sensor 50 is highly representative of the pedalling force exerted by the rider or the torque occurring in the crank system 26. This means that it is possible to calculate the desired data from the received signal, for which purpose the signal-processing unit 40 will be programmed in a suitable manner, as will be clear to a person skilled in the art. Figures 4A-E are obtained from a test ride on a bicycle whose frame 10 had been provided with a strain gauge sensor 50 mounted at the position indicated in figures 3A-B. Furthermore, the bicycle 1 was provided with a very accurate speed sensor. Figures 4A-E relate to a measurement period of 60 seconds; the time is plotted along the horizontal axis in all five figures.

In figure 4A, the measured velocity V, expressed in kilometres per hour, is plotted along the vertical axis, and in figure 4B the acceleration A calculated from the measured velocity V is plotted, expressed in m/s². The measurement period begins at time t=0, at which the bicycle is already at a velocity of approximately 10 km/h. This velocity is kept substantially constant for about 22 seconds, after which the rider accelerates to a velocity of approximately 20 km/h, which is reached at time t=35 sec. Further acceleration is commenced at time t=50 sec.

In the graph of figure 4B, it can be seen that for the first 22 seconds the acceleration fluctuates around 0 m/sec², and that the same applies between approximately t=38 sec and t=51 sec.

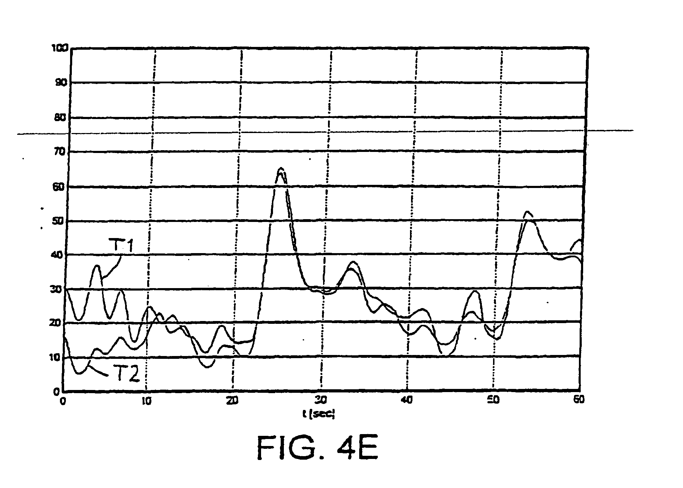

The torque T exerted on the crank system can be calculated from the acceleration which has been calculated in this way, taking into account air resistance and friction. This calculated torque T, expressed in Newtonmeters, is illustrated in figure 4E as graph T2.

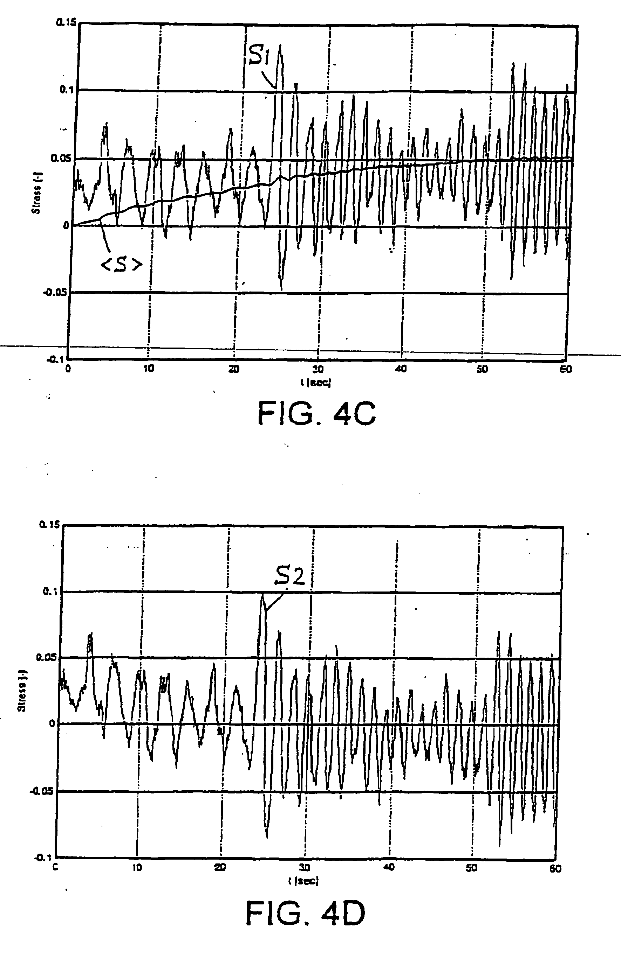

Figure 4C shows the measurement signal which emanates from the sensor 50 and is therefore representative of the stress S occurring in the frame, expressed in arbitrary units, as graph S1. Although it is to be expected that the measurement signal will be symmetrical around 0, in practice, as is shown, this is not necessarily always the case. However, it is possible to correct for this. In the example shown, firstly a mean value <S> is calculated for the measurement signal, integrated over a predetermined period. This mean signal is also shown in figure 4C. The period used to form the mean was in this case 1 minute.

By subtracting the mean value <S> calculated in this way from the asymmetrical measurement signal S1, a measurement signal S2 results which is symmetrical and which is shown in figure 4D.

The torque acting on the crank can be calculated from this signal S2 which is symmetrical by filtering the signal S2 in a suitable manner and multiplying it by a suitable amplification factor. The torque calculated in this way is shown in figure 4E as graph T1. It can be seen that the torque T1 as calculated on the basis of the measurement signal obtained from the sensor 50, on the one hand, and the torque T2 as calculated from the measured velocity, on the other hand, exhibit a very good level of correspondence, from which it is concluded that measuring the stress situation in the frame is a reliable measurement for determining the torque occurring in the crank system 26.

with regard to figure 4E, it is also pointed out that the two graphs T1 and T2 correspond less well for the first 20 seconds, which is caused by the automatic calibration carried out.

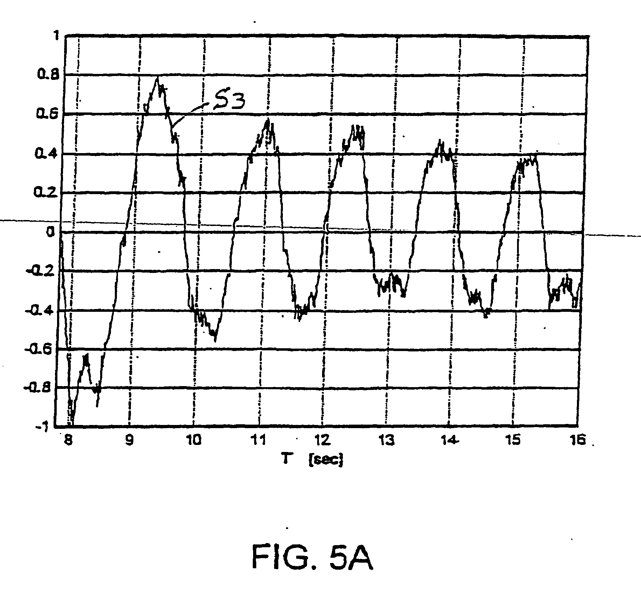

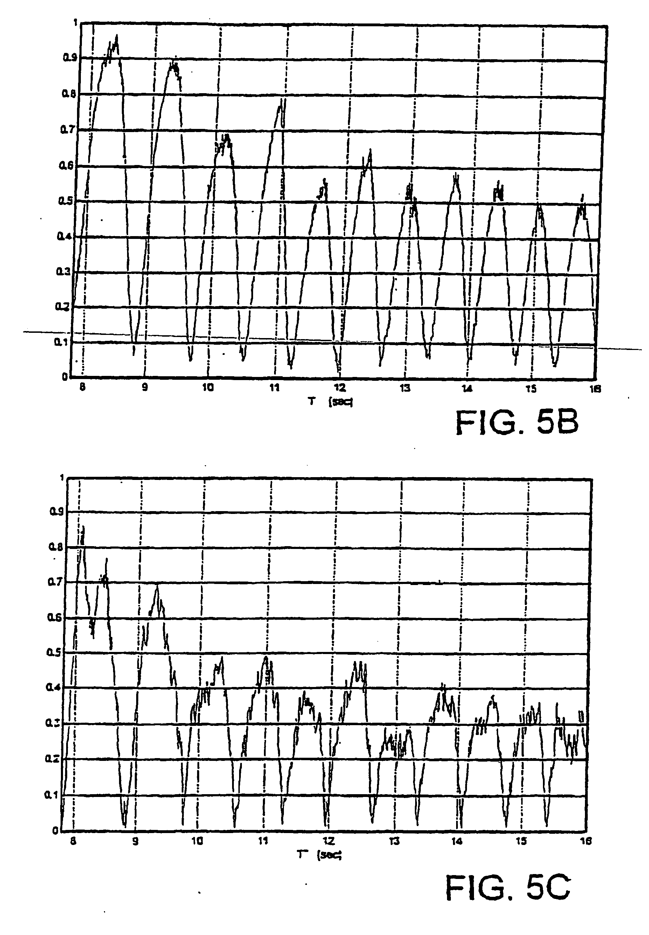

Figures 5A-C show measurement signals and illustrate a test bicycle provided with a sensor 50 as described above and provided with a known system which is incorporated in the crank system and is based on a planetary system. During a test, measurements were carried out using both sensors simultaneously. Figure 5A shows a measurement signal S3 which is obtained from the sensor 50, expressed in arbitrary units, for a period of 8 sec. Figure 5B shows a measurement signal S4, obtained over the same period, from the planetary system. Figure 5C shows the measurement signal S3 from figure 5A after rectification (S5).

It can be concluded from figures 5A-C that the sensor 50 according to the present invention provides a measurement signal S3 which contains at least as much information as the measurement signal S4 provided by the sensor according to the prior art. However, a significant difference is that the signal S3 which is obtained from the sensor 50 has both positive and negative signal values with respect to the zero level, corresponding to an alternating load on the frame by the right and left pedals.

Furthermore, it can be seen clearly in figures 5A-C that the sensor 50 provides a measurement signal S3 which, even after rectification (S5), is related to the pedalling force exerted on the pedals 27 by the rider, while the sensor according to the prior art can only measure the force generated in the drive line. With the measurement signal S3, the force peaks are relatively wide and flat, so that the electrical force assistance is offered over a wide angular range. By contrast, with the measurement signal according to the prior art the force peaks are relatively sharp, so that most electrical assistance is offered at a horizontal position (90°) of the crank arms and decreases rapidly besides that position. Particularly at the peaks around t=8.3 sec, t=13 sec and t=15.8 sec, it can be clearly seen in signals S3 and S5 that the force peaks are flattened or even have a local minimum in their centre, caused by the fact that at a virtually horizontal position of the crank arm (90°; 270°), a pedal moves-downwards and the rider is effectively exerting less force on it. When the pedals are in a more vertical position (approx. 30° and approx. 120°), the pedalling force is higher (S3, S5), but relatively little of thus considerable force is converted into forwards propulsion (S4). According to the present invention, it is at these very points that more assistance is offered, while the prior art offers less assistance at these points.

Although it is often sufficient to carry out zeroing and calibration during the production of the bicycle, it may, for various reasons, be desirable that it is possible to correctly determine the zero level of the measurement signal, for example in order to correct if the zero point shifts as a result of external influences. According to the present invention, a shifting zero point can be corrected for in various ways. By way of example, it is possible for the signal-processing unit 40 to be designed to detect when no load is being exerted on the pedals 27, for example by checking whether the pedalling frequency is zero, if appropriate supplemented by a velocity measurement with the aid of an additional speedometer. In such a situation, the pedalling force would have to be zero; therefore, the measurement signal which is then received is interpreted by the signal-processing unit 40 as the zero level. An effective measurement signal is then calculated by subtracting the calculated zero level from the actual measurement signal. When a calibration of this nature has been carried out, the measurement signal obtained from the sensor 50 will be intrinsically symmetrical, while an asymmetrical measurement signal then indicates an asymmetrical load, i.e. the rider exerts more force with his one leg than with his other leg. This may in itself be valuable information, for example when a sportsman is training.

It is also possible to modify the measurement signal, for example by, as described above, deducting a mean value <S> from the measurement signal. As a variant, it is possible to filter the measurement signal using a high-pass filter with a low crossover frequency of, for example, approximately 0.01 Hz. After such a modification, the amplitude of the measurement signal derived from the left leg will be equal to the amplitude of the measurement signal derived from the right leg, so that both legs are given equal assistance. This also applies in cases in which a cyclist has one leg which is significantly weaker than the other leg, so that in these cases the weak leg is given more assistance in relative terms than the strong leg by virtue of the present invention. By contrast, with electrical assistance according to the prior art, a cyclist of this type would experience a relatively large amount of assistance to his strong leg and relatively little assistance to his weak leg.

The level of a force or torque exerted on the pedals of a bicycle by a rider is calculated by a signal-processing device on the basis of a measurement signal which is obtained from a sensor which is attached to the frame of the bicycle in order to measure the deformation which occurs in the frame. The sensor may comprise one or more strain gauges.

The measurement signal can be processed in various ways in order to obtain various types of data. For example, it is possible to derive the pedalling frequency from the measurement signal. The instantaneous position of the crank arm can be determined from the phase of the measurement signal, and from this, in conjunction with the calculated pedalling force, it is possible to derive the torque generated in the crank system. The power passed on to the crank system can be derived by a combination of torque and rotational speed. The calorie consumption of the cyclist can be estimated from this information.

It is also possible to obtain information from the profile of the pedalling force as a function of the position of the crank arm (measurement signal as a function of the phase). On the one hand, this can be used to derive the "pedalling efficiency" of the cyclist, and possibly even, by suitable training, an unfavourable pedalling characteristic might be improved. Moreover, the pedalling characteristic can be considered to be an individual physical characteristic, comparable to a signature, so that it is possible to recognize an individual cyclist by his pedalling pattern and to adapt the characteristic of electrical assistance accordingly.

A pedalling characteristic can be defined on the basis of a number of parameters, such as: mean pedalling speed; mean pedalling force; force when moving off; relationship between pedalling force at the dead centre positions and at the horizontal position of the crank arms; duration of pause between the pedalling movements; etc. All the abovementioned parameters can be derived in a simple manner from the measurement signal, as will be clear to a person skilled in the art. It is possible to define cyclist categories in advance and to allocate an individual cyclist to such a cyclist category as a function of a measured pedalling characteristic; examples of cyclist categories of this type include: sporty; steady; long pauses between pedalling movements; strong/weak; slow pedaller/fast pedaller; etc.

In a preferred embodiment according to the present invention the signal-processing unit 40 is adaptive in the sense that a control characteristic is adapted to the cyclist category. In the case of a bicycle with an automatic gear change system, the signal-processing unit 40 may, for example, be designed, if the cyclist is a slow pedaller, to engage a higher gear even at relatively low pedalling speeds (for example even at 50 pedal revolutions per minute) and, if the cyclist is classified as a sporty cyclist, to engage a higher gear only at relatively high pedalling speeds (for example only at 85 pedal revolutions per minute). In this context, the absolute value of the pedalling force plays a less important role. In the case of a bicycle with electrical assistance to the pedalling force, the signal-processing unit 40 may, for example, be designed, if the cyclist pedals irregularly and takes long pauses between pedalling, to drive the motor for longer after the pedalling movement has stopped and, if the cyclist is classified as a sporty cyclist, to set the motor power at a higher level when starting off than for a steady riding profile.

It is possible that a plurality of sensors is used, so that it is possible to determine the direction of the pedalling force exerted in three dimensions.

Furthermore, the deformation of the frame can be measured using alternative measuring methods. As is known, strain gauges are eminently suitable for measuring local deformation, but it is not necessary to accurately measure local deformation. The abovementioned embodiment in which strain gauges are accommodated in a sticker already measures the mean deformation in a larger section of the frame. However, it is also possible to form a mean of the deformation over a larger part of the frame, for example a greater length of a frame tube. For this purpose, it is possible, for example, to measure the bending of a frame tube over a large part of its length by means of optical or mechanical sensors. These sensors may be arranged in the interior of the frame tube.

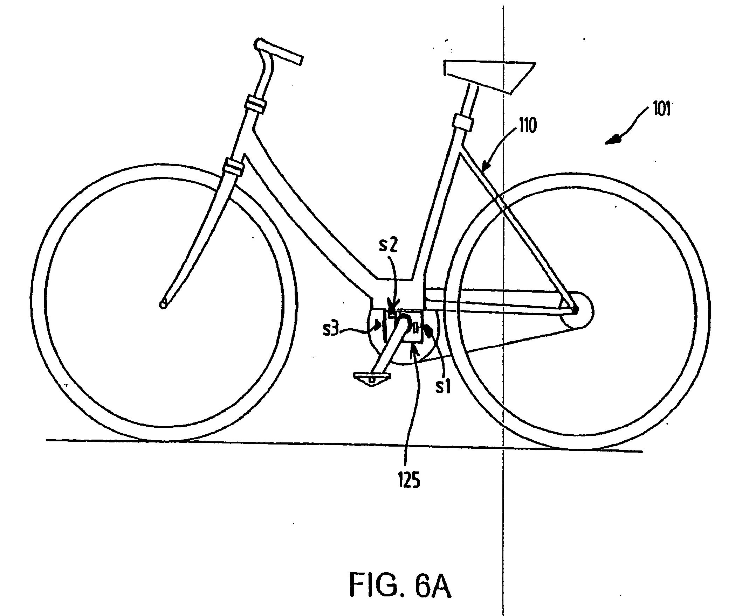

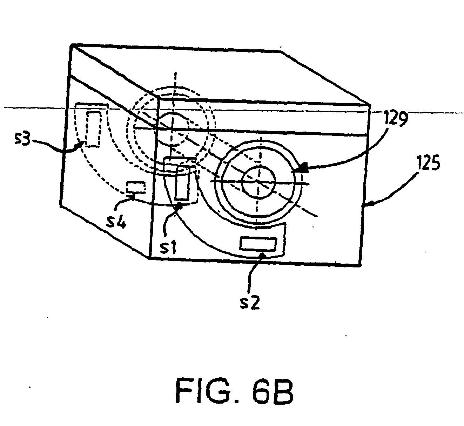

In the above, a standard bicycle has been explained in which the crank is mounted in a horizontal, tubular bottom bracket 25 which forms part of the frame 10. However, it is also possible that the crank is mounted in a separate bottom bracket which does not form part of the frame and is securely attached to the frame, for example by means of screws. Figure 6A shows a side view, similar to figure 1, of a bicycle 101 which is provided with such a frame 110, while figure 6B is a diagrammatic, perspective view on a larger scale of a box-like bottom bracket 125. The crank mounted in the bottom bracket 125 is denoted by the number 129. This bottom bracket 125 is provided with a plurality of sensors S1 to S4, positioned so as to measure the deformation occurring in the bottom bracket 125 as a result of the pedalling force. In the case shown, the sensors are arranged on the side walls of the bottom bracket 125, aligned in the vertical and horizontal direction, respectively, with the crank 129. The electric motor 45 is also accommodated in the bottom bracket 125, but this is not shown for the sake of simplicity. Furthermore, the signal-processing device 40 is preferably also accommodated in the bottom bracket 125, which is likewise not shown.

One advantage of such a box-like bottom bracket 125 is that it is then easily possible to adapt a bicycle which is not provided with electric pedalling assistance, by replacing the "old" bottom bracket with a bottom bracket of figure 6B, with integrated motor drive 45, signal processing device 40 and sensors S1/S4.

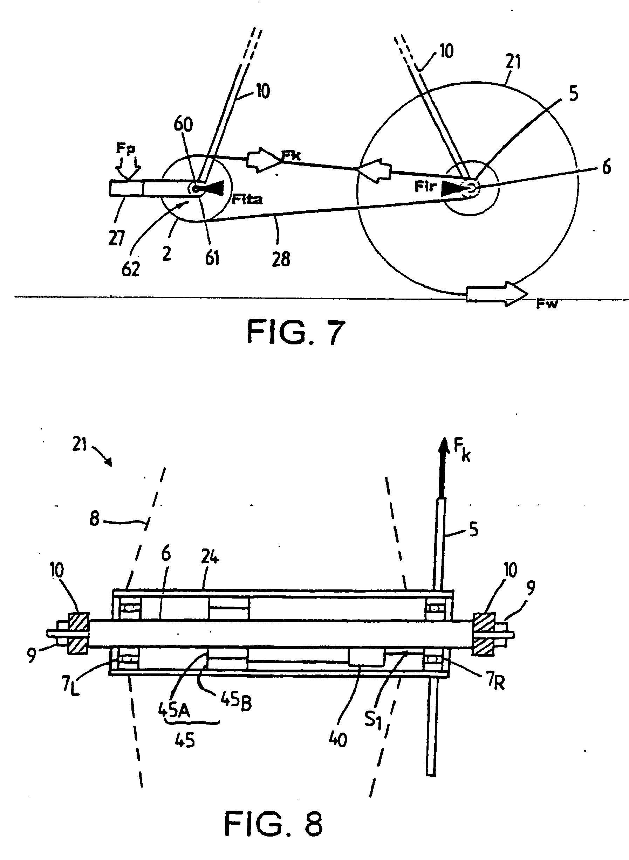

Figure 7 diagrammatically shows some components of the drive system of a bicycle. A bicycle has a frame 10, in which a rear wheel 21 is mounted and is driven by means of pedals 27 by a chain 28. On one side, the chain 28 is in engagement with a gear wheel which is mounted on a tubular hub 24 of the rear wheel 21, which is mounted on a rear axle 6. The chain 28 is also in engagement with a sprocket 2, which is mounted on a crank 60 and is rotated by means of the pedals 27. The pedalling force exerted on a pedal 27 by a cyclist is denoted in figure 7 as Fp and is predominantly vertically oriented; the tension prevailing in the chain 28 is denoted as Fk and is predominantly horizontally oriented. This chain force Fk has the tendency to pull the rear axle 6 and the crank 60 towards one another, which is prevented by the frame 10, so that the frame 10 exerts a force Flr on the rear axle 6 while the frame 10 exerts a force Flta on the crank 60. The frictional force between rear wheel 21 and roadway is denoted by Fw in figure 7.

In the case of an electrically assisted bicycle, there are various positions where the electric drive motor may be arranged and can act on the drive components of the bicycle. In this context, the most significant variants are:
- engaging on the rear axle;
- engaging on the crank;
- engaging on the chain;
- engaging on the front wheel;
- engaging on the rear wheel.
In the following, the present invention will be explained in more detail on the basis of an example with a motor which engages on the rear axle. It may be clear that this description should not be understood as a limitation of the invention to electrically assisted bicycles with a motor which acts on the rear axle; on the contrary, the principles described below are equally applicable, mutatis mutandis, to electrically assisted bicycles with a motor which engages on the crank, or the chain, or the front wheel, or the rear wheel, etc.

Figure 8 shows a diagrammatic plan view of the rear axle 6 of a bicycle, for the situation that an electric motor 45 is associated with the rear axle; in the following, this motor will be referred to as hub motor. The ends of the rear axle 6 are fixed to the frame 10 of the bicycle by means of nuts 9. The tubular hub 24 is rotatably mounted on the rear axle 6 by means of two rotary bearings 7R and 7L. The gearwheel 5, which is driven by the said chain 28, is mounted at one end of the hub 24, generally the right-hand end. Spokes are diagrammatically indicated in figure 8 by 8.

Furthermore, the hub motor 45, which is only diagrammatically indicated, is disposed inside the tube 24. Electric hub motors are known per se, and consequently their design does not have to be shown and explained in detailed form here. It is sufficient to point out that the hub motor 45 has a first output 45A fixed to the rear axle 6, and a second output 45B fixed to the hub 24, which outputs 45A and 45B can be driven so as to rotate with respect to one another. For this purpose, the hub motor 45 needs an electrical energy source, such as a battery, which will be mounted at a suitable position on the frame 10 of the bicycle and which will be connected, by means of electrical conductors which are fixed with respect to the frame 10 and with respect to the rear axle 6, to the hub motor 45, all this as is known per se and not shown in the figure for the sake of simplicity.

When the hub motor 45 is activated, it supplies a propulsive force to the hub 24, for the purpose of propelling the wheel 21 with respect to the frame 10 and thus propelling the bicycle with respect to the road on which it is riding. In principle, the propulsive force (or propulsive moment) supplied by the hub motor 45 could supply 100% of the propulsive force of the bicycle, and could be selected and actuated by the rider, so that the hub motor 45 acts as an ordinary drive motor and the bicycle acts as an electric moped. However, the present invention specifically relates to an electrically assisted bicycle, which means that the propulsive force (or propulsive moment) supplied by the hub motor 45 serves only to assist the cyclist when cycling by partly providing the pedalling force required for cycling. This means that the cyclist himself also has to pedal and supply pedalling force; the hub motor 45 then supplies a propulsive force which is proportional to the force supplied by the cyclist. If the cyclist does not move the pedals or rotates the pedals without applying force, the hub motor 45 does not supply any propulsive force. The extent of assistance offered by the hub motor 45 can be adjustable; the hub motor 45 is generally set in such a manner that it supplies approximately the same amount of propulsive force as the pedalling force from the cyclist, at least at relatively low speeds. At relatively high speeds, the contribution decreases progressively. Electrically assisted bicycles of this nature are known per se.

Therefore, the hub motor 45 of an electrically assisted bicycle is activated under control of a control member 40, for example a suitably programmed microprocessor or the like, which is mounted on a fixed component of the bicycle, which fixed component is advantageously the rear axle 6 itself, as outlined in figure 8. It will be clear that for embodiments with a crank motor, the control member will preferably be mounted on a bottom bracket.

This control member 40 is designed to activate the electric motor on the basis of the chain force Fk and a desired, preprogrammed assistance characteristic.

This assistance characteristic may contain a speed-dependent component. One example of an assistance characteristic with a speed-dependent component is:
a) at speeds of lower than 22 km/h, the propulsive torque supplied by the electric motor is 50% of the propulsive torque supplied by the cyclist;
b) at speeds of higher than 25 km/h, the propulsive torque supplied by the electric motor is zero;
c) at speeds of between 22 km/h and 25 km/h, the propulsive torque supplied by the electric motor decreases linearly from 50% to zero.

All this can be adapted in order to comply with applicable statutory provisions.

In order to be able to actuate the hub motor 45 in the desired way depending on the force supplied by the cyclist and, preferably, also depending on the bicycle speed, the control member 40 should receive signals which are representative of the said parameters. Various sensors are known in the prior art for supplying such measurement signals, the action of which known sensors is based on measuring on at least one component which moves with respect to the frame. The present invention proposes an improvement by using a sensor whose action is based on measuring on a component which is fixed with respect to the frame. More particularly, the present invention proposes using a sensor which can measure a deformation caused by the driving force (chain force) in such a fixed component.

Two exemplary embodiments will be dealt with in more detail in the following. A first example relates to deformation in a stationary bearing component. A second example relates to bending of a stationary axle.

When the cyclist exerts a pedalling force Fp and a chain force Fk prevails in the chain 28, as a result a force Fk is exerted on the circumference of the gearwheel 5. The direction of this chain force Fk coincides with the direction of the top part of the chain 28 at the location of the gearwheel 5, which is generally substantially horizontal. This chain force Fk is supported on the frame 10 via the hub 24, the bearings 7R and 7L and the axle 6, respectively. Consequently, a force which is substantially horizontally oriented and with respect to the rear axle 6 is substantially radially oriented and the level of which is proportional to the chain force Fk, prevails in the bearings 7R and 7L. It should be clear that the level of the force in the bearings is dependent on their distance from the gearwheel 5; in the example illustrated, the force in the right-hand bearing 7R will be greater than in the left-hand bearing 7L.

Also, the chain force FK exerts a substantially horizontally oriented force Fk on the circumference of the sprocket 2, which force is supported, via the crank 60 and the crank bearings diagrammatically indicated by 62, respectively, on a bottom bracket 61 which is fixed to the frame 10, so that then a force which is substantially horizontally oriented and is substantially radially oriented with respect to the crank 60, and the level of which is proportional to the chain force Fk, prevails in the crank bearings 62.

In a first exemplary embodiment proposed by the present invention, the forces occurring in at least one of the said bearings are measured. If a bicycle has a rear axle which is provided with a hub motor, it is most expedient to use one of the rear-axle bearings 7 for this purpose, in which case the right-hand bearing 7R is generally able to a give a stronger signal. In the design variant illustrated in figure B, the right-hand bearing 7R is provided with an integrated deformation sensor, as will be explained more extensively below, which sensor provides a measurement signal S1 to the control member 40. As an alternative, the left-hand bearing 7L may be provided with an integrated deformation sensor, or both the right-hand bearing 7R and the left-hand bearing 7L may be provided with an integrated deformation sensor. Rotary bearings provided with integrated internal sensors, also referred to below as instrumented rotary bearings, are already known in the prior art and are commercially available as a standard product. By way of example, reference is made in this context to American patent 4.203.319.

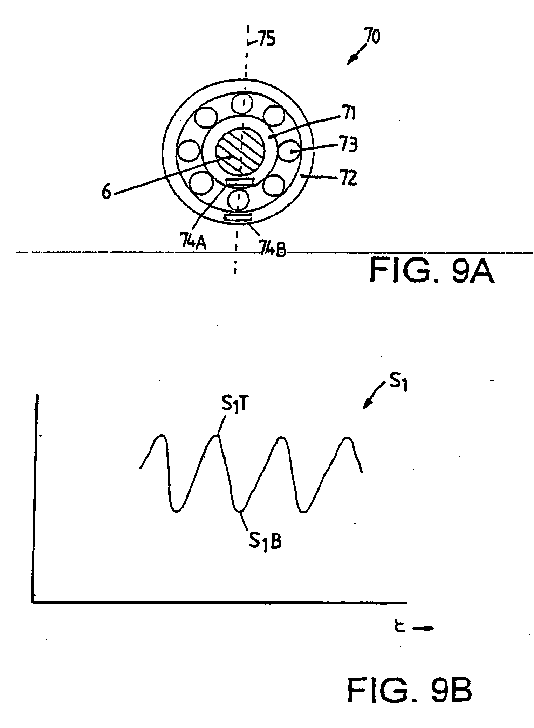

Figure 9A diagrammatically shows a cross section through an instrumented rotary bearing 70, and figure 9B diagrammatically shows an example of a section of the measurement signal S1 generated by such an instrumented rotary bearing 70. Such a rotary bearing 70 has an inner race 71, an outer race 72 and balls or rolls 73 arranged between them. Furthermore, the bearing 70 is provided with a deformation sensor 74, for example based on strain gauges, which detects a deformation in a bearing race as a result of the balls/rolls moving past. This sensor may be arranged in or on the inner race 71, as indicated in figure 9A as 74A, or in or on the outer race 74, as indicated in figure 9A as 74B. In the following, both variants will be referred to without distinction as deformation sensor 74.

During use, the inner race 71 and the outer race 72 will rotate with respect to one another, during which process the balls/rolls 73 will roll along the outer surface of the inner race 71 and along the inner surface of the outer race 72. In the process, the force-transmitting balls/rolls 73 will move past the deformation sensor 74 so that a deformation caused by the balls/rolls 73 at the location of the deformation sensor 74 will fluctuate and the deformation sensor 74 will generate an AC signal S1 (Figure 9B), the peaks S1T of which correspond to the passing of a ball/roll 73 and the valleys S1B of which correspond to the passing of a space between two balls/rolls 73. The amplitude of this AC signal S1 will be dependent on, and will generally be proportional to, the level of a force which is exerted by the outer race 72 and the inner race 71 on one another in a radial direction which coincides with the sensitivity centre of the sensor 74. This direction will also be referred to below as the sensitivity direction 75 of the bearing 70. With the orientation shown in figure 9A, in which the sensor 74 is situated in a vertical plane through the centre of the bearing 70, the sensor 74 is predominantly sensitive to vertical forces and is virtually insensitive to horizontal forces; the sensitivity direction 75 of the bearing 70 is then vertically oriented. When used as a rear axle bearing 7 or crank bearing 62, intended to be able to measure the chain force Fk, the bearing 70 should be mounted in such a manner that the sensitivity direction 75 of the bearing 70 coincides as closely as possible with the direction of the chain force Fk, which will generally be substantially horizontal.

The explanation given above applies in a situation in which the level of the force exerted by the outer race 72 and the inner race 71 on one another in the sensitivity direction 75 of the bearing 70 is constant, at least over a time scale which lasts considerably longer than the time between two successive passages of a ball. More particularly, it should be pointed out that the minimum levels S1B of the AC signal are virtually independent of the level of the force, and that the maximum levels S1T of the said signal are always dependent on the level of the force which is to be measured at that specific moment. In fact, the maximum levels S1T form sample values, i.e. instantaneous recordings of the force in the bearing 70. In practice, for use as a sensor for measuring a chain force in a bicycle, this may lead to problems, for two reasons. Firstly, the sampling frequency, which is defined by ball passages, in a bicycle drive system is relatively low: for a rear axle bearing, under normal conditions, it is typically 0-15 Hz, and for a crank bearing it is typically 0-6 Hz. Secondly, the pedalling force Fk which is to be measured is not constant, but rather fluctuates with a frequency which is twice as great as the pedalling frequency, typically in the range from 0-4 Hz. More particularly, the said frequencies are related to one another in fixed ways: the sampling frequency determined by ball passages for a crank bearing is typically three times as great as the pedalling frequency, while for a rear-axle bearing this sampling frequency is typically five times as great as the pedalling frequency. Since the sampling frequency is so close to the fluctuation frequency in the variable to be measured (in this case the chain force Fk), it is particularly difficult to reliably derive a control signal for the electric motor from this signal, in such a manner that the electric motor supplies a force which always smoothly follows the chain force.

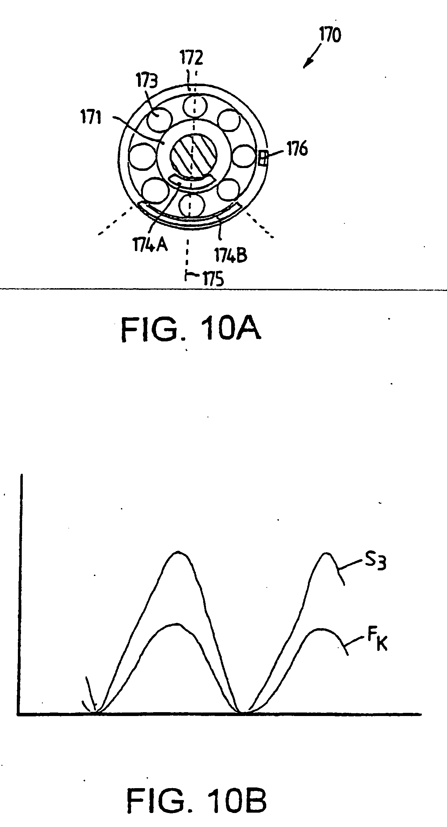

The present invention also offers a solution to this problem, by modifying a standard instrumented bearing in such a manner that the output signal which is generated is substantially independent of the rotary position of the bearing races with respect to one another and is therefore independent of the exact tangential positions of the balls/rolls. Such a modified bearing 170 is diagrammatically illustrated in figure 10A; herein, components which correspond to components of the standard bearing illustrated in figure 9A are denoted by reference numerals which have been increased by 100.

In the bearing 170 illustrated in figure 10A, a measurement signal S3 (figure 10B) is generated which is not dependent on the deformation caused by a single ball/roll 173 at a single location, but rather is dependent on a combination of the deformations caused by a plurality of balls/rolls 173 at a plurality of locations. For this purpose, the bearing 170 could have a plurality of sensors arranged next to one another; in the embodiment illustrated in figure 10A, a deformation sensor 174 is of elongate shape or is in the shape of a segment of a circle, so that the sensor 174 is sensitive to the deformation in a zone of the bearing 170 with a relatively large angular dimension, specifically in such a manner that this zone always corresponds to at least two balls/rolls 173. The angular dimension of this zone preferably corresponds to an integer multiple of the angular distance between successive balls/rolls 173, so that the number of balls/rolls 173 which corresponds to the deformation sensor 174 is always constant. In the example illustrated, this number is equal to two, but it may also be larger or smaller.

If the said number is equal to one, this already offers the advantage that the considerable oscillations in the signal value are reduced. If the said number is greater than one, the measurement signal S3 can now be considered at any moment as a mean of the deformation contributions from two or more balls/rolls 173, in which case the measurement signal S3 may have a virtually constant value which is only still dependent on the force in the bearing 170, and no longer on the accidental orientation of the balls/rolls 173 with respect to the sensor 174. If the force in the bearing 170 varies, for example as a result of variations in pedalling force during a pedal revolution, the value of the measurement signal S3 at any given moment is at least approximately proportional to the instantaneous pedalling force.

Since the sensor 174 now has a relatively large angular dimension, the sensor 174 is now also sensitive to forces whose direction may exhibit a relatively great distribution. The principal sensitivity direction 175 of the bearing 170 corresponds to a radial plane through the centre of the sensor 174; for force components which are perpendicular to the principal sensitivity direction 175, the sensitivity of the bearing 170 is much less or even zero. In this context, it is recommended for the angular dimension of the sensor 174 to be no greater than 90°.

In the situation in which the rotary bearing 70; 170 is used for bearing the rear axle 6, for example because the drive motor is situated in the wheel hub 24 of the rear wheel 21, the inner race 71 is stationary with respect to the bicycle frame 10; in this case, it is practical to use an instrumented rotary bearing 70; 170 of which the inner race 71 is provided with a deformation sensor 74A. In the situation in which the rotary bearing 70; 170 is used for bearing the crank 60, for example because the drive motor acts on the crank, the outer race 72 is stationary with respect to the bicycle frame 10, in this case, it is practical to use an instrumented bearing 70; 170 of which the outer race 72 is provided with a sensor 74B.

In an exemplary embodiment in which the bicycle is provided with such an instrumented rotary bearing 70; 170 for the rear axle or for the crank and in which the said control member 40 receives the said measurement signal S1; S3, the control member 40 is designed to calculate the chain force Fk on the basis of the peak value S1T of the AC signal S1 and/or on the basis of the amplitude |S1T-S1B| of the AC signal S1 (sampled), or on the basis of the instantaneous signal level of the measurement signal S3, respectively, taking into account bicycle-specific conversion factors, as will be clear to a person skilled in the art. Furthermore, the control member 40 is designed to activate the electric motor on the basis of the chain force Fk calculated in this way.

To implement a speed-dependent characteristic, the control member 40 has to have information relating to the bicycle speed, which, apart from a known conversion factor, is equivalent to the rotary speed of the rear wheel 21 and therefore the hub 24 with respect to the rear axle 6. If the said first rotary bearing 70 is used for bearing the rear axle 6, such speed information can be derived from the AC signal S1 generated thereby, specifically in the form of the frequency of this AC signal S1. This advantage can also be offered for the said second rotary bearing 170 if it is provided with a deformation sensor 176 which is sensitive to a single ball/roll 173, as is also shown in figure 10A. This deformation sensor 176 applies a measurement signal S4 which may be equal to the signal S1 which has already been discussed and which therefore contains velocity information.

Therefore, in this first exemplary embodiment, the control member 40 may be designed to calculate the bicycle speed on the basis of the frequency of the AC signal S1, S4, taking into account bicycle-specific conversion factors, such as, inter alia, the number of balls/rolls 73 per bearing and the circumference of the rear wheel 21, as will be clear to a person skilled in the art.

In a variant, the same result can be achieved in a more direct way without actually calculating the chain force Fk and the bicycle speed as an interim result, as will be clear to a person skilled in the art.

When the cyclist exerts a pedalling force Fp and a chain force Fk prevails in the chain 28, as a result, as has already been stated, a substantially horizontally oriented force is exerted on the circumference of the gearwheel 5, which force is supported on the frame 10 via the hub 24, the bearings 7R and 7L and the axle 6, respectively. Therefore, a bending moment, which will cause bending of the rear axle 6, then prevails in the rear axle 6, in which case the neutral line of the rear axle 6 will lie in a plane which is substantially horizontally oriented. The level of this bending moment, and therefore the level of the bending which occurs in the rear axle 6, is substantially directly proportional to the instantaneous chain force Fk.

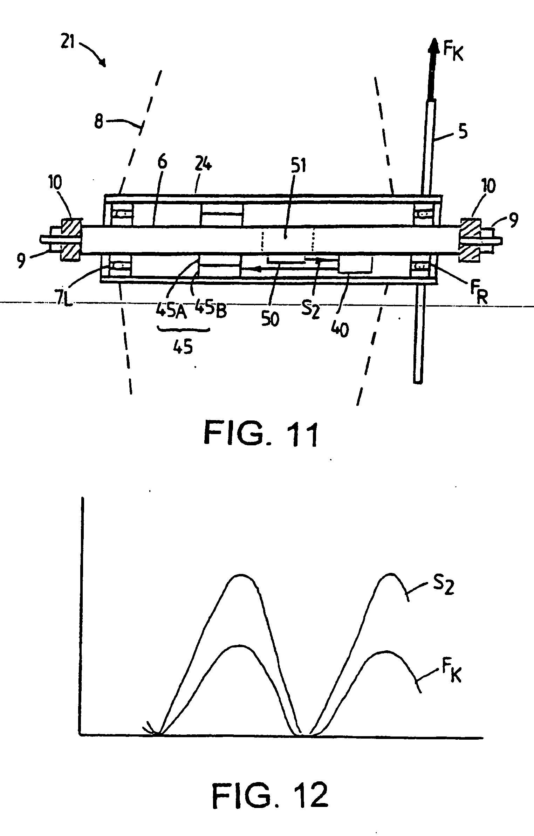

In a second exemplary embodiment proposed by the present invention, this bending is measured. In the exemplary embodiment shown in figure 11, the rear axle 6 is provided with a bending sensor 50 which provides a measurement signal S2 (figure 12) to the control member 40, which measurement signal S2 is representative of the bending occurring in the axle 6 and preferably exhibits a linear dependency on the said bending.
This bending sensor 50 is in this case arranged in such a manner that it is substantially only sensitive to bending in the horizontal direction. The design of such a bending sensor 50 may be a design which is known per se, based on one or more strain gauges, as will be clear to a person skilled in the art. The bending sensor 50 may be mounted on that side of the rear axle 6 which becomes longer as a result of the bending or on that side of the rear axle 6 which becomes shorter as a result of the bending.

In this second exemplary embodiment, in which the rear axle 6 is provided with such a bending sensor 50 and in which the said control member 40 receives the said measurement signal S2, the control member 40 is designed to calculate the instantaneous chain force Fk on the basis of the instantaneous value of the said measurement signal S2, taking into account bicycle-specific conversion factors, as will be clear to a person skilled in the art. Furthermore, the control member 40 is designed to activate the hub motor 45 on the basis of the chain force Fk which has been calculated in this way and a desired, preprogrammed assistance characteristic, in a similar way to that described above in connection with the first exemplary embodiment.

Preferably, the bending sensor 50 comprises both a sensor component which is mounted at the front of the rear axle 6 and a sensor component which is mounted at the back of the rear axle 6, the signals from which sensor components are combined. On the one hand, this has the advantage that the measurement signal becomes stronger. On the other hand, this has the advantage that disruptive influences which are not related to the horizontal bending are substantially eliminated. In this context, for example, stresses which are oriented in the longitudinal direction of the rear axle as a result of the tightening of nuts 9 which are screwed onto the ends of the rear axle 6 for attachment to the frame 10 may be mentioned.

It is noted that both the measurement signal S1; S3; S4 from the instrumented wheel bearings 7 and the measurement signal S2 from the bending sensor 50 contain a signal component which reflects the pedalling frequency, at least if the cyclist is actually rotating the pedals. The pedalling frequency is expressed by a periodic fluctuation, with the pedalling frequency, in the level of the chain force Fk. In the case of, for example, a bending sensor mounted on the rear axle 6, the measurement signal S2 generated thereby in principle has a DC value corresponding to the chain force Fk, while the value of this DC voltage fluctuates with the fluctuations in pedalling force and therefore with a frequency which is twice as great as the pedalling frequency.

The control member 40 may be designed to calculate the bicycle speed on the basis of the pedalling frequency, taking into account bicycle-specific conversion factors, such as the transmission ratio and the circumference of the rear wheel, as will be clear to a person skilled in the art.

Furthermore, the control member 40 may be designed to activate the electric motor on the basis of the instantaneous value of the chain force, so that the motor force fluctuates in phase with the pedalling force. However, the control member 40 may also be designed to activate the electric motor on the basis of a processed value of the chain force, in order to provide for the user an improved comfort sensation. By way of example, the activation of the electric motor may be executed on the basis of a mean value of the chain force, so that the motor force is substantially constant. However, it is also possible, with the fluctuating chain force, to add up a constant value, so that although the activation fluctuates in phase with the chain force, it acquires a more uniform profile; more particularly, therefore, drive will still be provided at the "dead centre positions" in the pedal movement.

Normally, a rear axle is designed in such a manner that it is as rigid as possible. By contrast, a further development of the inventive idea lies in designing the rear axle 6 in such a manner that for a specific load it exhibits bending which is relatively great, at least at the location of the sensor 50. For this purpose, a rear axle 6 according to the present invention preferably has a sensor-carrying part 51, the deformation of which, under a specific load, is greater than the deformation of adjacent axle sections, and the sensor 50 is mounted on the said sensor-carrying part 51 which is more sensitive to deformation. The greater sensitivity to deformation can be introduced by providing the sensor-carrying part 51 with an adapted cross section or by making the sensor-carrying part 51 from an adapted material, or in other suitable ways. Suitable adapted materials could be materials with a lower modulus of elasticity.

The sensor-carrying part 51 preferably has a greater sensitivity to deformation in the horizontal direction with a sensitivity to deformation in the vertical direction which remains the same or is even reduced. This may, for example, be brought about by providing the sensor-carrying part 51 with a rectangular cross section, in which case the dimension in the horizontal direction is smaller than the dimension in the vertical direction. The dimension in the horizontal direction may be smaller than the diameter of adjacent axle sections, and the dimension in the vertical direction may be greater than the diameter of adjacent axle sections.

In both the exemplary embodiments described above, the sensor 74; 174; 50 is substantially only sensitive to horizontally oriented forces, so that the sensor is virtually only sensitive to the driving forces. More particularly, the sensor is virtually insensitive to forces which act in the vertical direction, such as the forces caused by the weight of the rider, the pedalling force Fp exerted by the cyclist, or vertical forces which are caused by riding itself, such as when passing over an uneven road surface or when cornering.

The driving by the motor causes a reactive force on the roadway, which ultimately propels the bicycle. This roadway reactive force has a horizontal direction and causes a bending in the rear axle in the same direction as the bending which is directly caused by the chain force Fk. The influence of this reinforcing effect can be compensated for in the preprogrammed characteristic of the control member 40.

In the above, the invention has been explained for normal conditions, in which it is tacitly assumed that the vehicle (bicycle) is moving at constant speed on a horizontal roadway. With a more advanced drive, the control member 40 is designed to include factors such as a change in speed and/or a slope angle of the roadway in the actuation of the electric motor.

A reduction in speed may be desirable, for example if the cyclist is braking. In that case, he will generally keep the pedals still, so that there is no electrical assistance. Moreover, during braking, the motor can be driven by the bicycle, in order in this way to charge the battery. To this end, the control member 40 may be designed to calculate the instantaneous bicycle velocity V at successive times, to calculate the velocity change dV/dt from this, and, if dV/dt becomes negative, to switch the motor as a brake load.

A reduction in velocity may be undesirable, for example if the cyclist is cycling uphill. In that case, if dV/dt is negative, more intensive assistance is in fact desired. On the other hand, if the cyclist is cycling down hill, the assistance can be reduced, and in these circumstances it is even possible for the motor to be switched as a brake load at a constant velocity.

For this purpose, it is desirable for the control member 40 to have a signal which is indicative of the angle of slope. According to a significant advantage of the present invention, the signals S1 to S4 described above include a component which is indicative of the slope angle. In a further preferred variant of the present invention, the control member 40 is designed to use this signal component for an assistance characteristic as described above.

If the bicycle is on a slope, the sensitivity direction 75 (the "horizontal" of the bicycle) forms an angle with the actual horizontal. The force of gravity then has a component in the direction of this sensitivity direction 75, which manifests itself in a shift in the measurement signals. This shift can be detected, for example by detection of the shift in the mean of the fluctuating chain force signal.

In both the exemplary embodiments described above, a reliable way is offered for measuring the driving torque and/or the chain force (Fk) supplied by a cyclist and for actuating a hub motor 45 on the basis of the pedalling force supplied by the cyclist. The embodiments consistently offer the significant advantage that a single sensor (74; 174; 50) is sufficient and that this sensor may be mounted on the same component of the bicycle as that to which the control member 40 is attached, namely the rear axle 6 itself or on the inner race 71 fixed to the rear axle 6, of the wheel bearing 7. A bending sensor 50 mounted on the rear axle measures the bending which occurs in the rear axle itself as a result of the pedalling force. A pressure sensor 74 mounted in the wheel bearing 7 measures the forces caused in the wheel bearing by the chain force.

It will be clear to a person skilled in the art that he scope of the present invention is not restricted to the examples discussed above, but rather various amendments and modifications thereto are possible without departing from the scope of the invention as defined in the appended claims. For example, as a variant, it is possible that the driven wheel is the front wheel of the bicycle.

In the above, the invention has been described for a vehicle (bicycle) provided with electrical assistance. However, the present invention is also embodied by a modular system for measuring a driving force in a chain of a bicycle, which system is designed to supply an electrical signal representative of said driving force, which system comprises a driven wheel axle which is provided with a bending sensor which generates a measurement signal which is representative of a bending of the axle, which signal can be used or any desired purposes by a processor or the like. One possible purpose may be to control a gear system.

## Claims

1. Method for controlling an auxiliary motor of a bicycle, wherein the motor is a hub motor (45), the motor (45) being associated with the axle (6) of a driven wheel (21) of the bicycle (1), wherein a control signal is determined in accordance with a predetermined characteristic, on the basis of a measurement signal which is representative of the level of a pedal force (Fp) exerted by a rider of the bicycle, and wherein the measurement signal is provided by:
a method for providing a measurement signal which is representative of the level of a pedal force (Fp) exerted by the rider of the bicycle (1), wherein the bending is measured as caused by this force in the axle (6) on which a driven wheel (21) is mounted, wherein the bending is measured in a plane that is substantially parallel to the driving force (Fk) exerted on said driven wheel (21) by a chain (28), wherein a sprocket driven by said chain (28) is mounted on said axle (6); wherein a bending sensor (50) is mounted on said axle (6); and wherein the driving force (Fk) prevailing in the said chain (28) is derived from the instantaneous value of the measurement signal (S2) generated by the said sensor.

2. The method according to claim 1, wherein the hub motor has a first output (45A) fixed to the axle (6), and a second output (45B) fixed to a hub (24), which outputs can be driven so as to rotate with respect to one another.

3. The method according to any of the preceding claims, wherein a signal-processing unit (40) calculates a pedal speed from the cyclical nature of the measurement signal.

4. Method for controlling an auxiliary motor of a bicycle, wherein the motor is a hub motor (45), the motor (45) being associated with the axle (6) of a driven wheel (21) of the bicycle, wherein a control signal is determined in accordance with a predetermined characteristic, on the basis of a measurement signal which is representative of the level of a pedal force (Fp) exerted by a rider of the bicycle, and wherein the measurement signal is provided by:
a method for measuring a force (Fk) in a substantially linear transmitting member (28) fitting around two rotating transmission members (2, 5) of the bicycle, comprising the measurement of the forces occurring in a bearing of the driven wheel (21) in a plane which is substantially parallel to the said force (Fk), wherein at least one of the said transmission members is rotatably mounted by means of bearings (70) with respect to a frame (10), wherein at least one of the said bearings is provided with an integrated sensor (74), and wherein the force (Fk) prevailing in the transmitting member (28) is derived from the measurement signal (S1; S4) generated by the said sensor.

5. The method according to claim 4, wherein the hub motor has a first output (45A) fixed to an axle (6), and a second output (45B) fixed to a hub (24), which outputs can be driven so as to rotate with respect to one another.

6. Bicycle (1), comprising:
a frame (10);
a driven wheel (21) comprising a wheel hub (24) which, through wheel bearings, is mounted on an axle (6) which is fixed to the frame (10);
a rotatable sprocket (5) attached to the said wheel hub (24);
a chain (28) at least partly fitting around said sprocket (5);
**characterized in that** an electric hub motor (45) is associated with the axle (6), and **in that** said axle (6) is provided with a bending sensor (50) which generates a measurement signal (S2) which is representative of a bending of the axle (6).

7. Bicycle according to claim 6, wherein the axle (6) with the sensor (50) mounted on it is mounted in such a manner with respect to the frame (10) that said sensor (50) is sensitive to forces which are directed parallel to the driving force (Fk) in the chain (28) and is substantially insensitive to force components which are directed perpendicular thereto.

8. Bicycle according to claim 7, wherein the axle (6) is provided with a sensor-carrying part (51), of which the bending strength is lower than the bending strength of adjacent axle sections, and wherein the sensor (5) is mounted on said sensor-carrying part (51).

9. Bicycle according to any of claims 6-8, wherein the hub motor (45) is disposed inside the wheel hub (24), the hub motor (45) engaging on the axle (6).

10. Bicycle according to claim 9, wherein the hub motor has a first output (45A) fixed to the axle (6), and a second output (45B) fixed to the hub (24), which outputs can be driven so as to rotate with respect to one another.

11. Bicycle according to any of claims 6-10, wherein the bending sensor is disposed inside the wheel hub (24).

12. Bicycle according to any of the claims 6-11, wherein the electric motor (45) is activated under control of a control member (40).

13. Bicycle according to claim 12, wherein the control member (40) is mounted on the axle (6).

14. Bicycle according to claim 12 or 13, wherein the control member (40) is designed to calculate an instantaneous chain force (Fk) on the basis of an instantaneous value of the measurement signal (S2), taking into account bicycle-specific conversion factors.

15. Bicycle according to any of claims 12-14, wherein the control member (40) is designed to activate the motor on the basis of an instantaneous value of the chain force.

16. Bicycle according to claim 12 or 13, wherein the control member (40) is designed to activate the motor on the basis of a processed value of the chain force.

17. Bicycle according to any of claims 12-16, wherein the measurement signal (S2) from the bending sensor (5) contains a signal component which reflects a pedalling frequency, wherein the control member (40) is designed to calculate a bicycle speed on the basis of the pedaling frequency, taking into account bicycle-specific conversion factors.

18. Bicycle according to any of claims 12-17, wherein said bending sensor (50) and the said control member (40) are integrated on a single chip.

19. Bicycle according to any of claims 12-18, further provided with an automatically switching acceleration system which is designed to bring about a predetermined transmission ratio in the transmission line between the crank system and a driven wheel under the control of the control member; and wherein the control member is designed to generate a control signal for the automatically switching acceleration system on the basis of the measurement signal received from the bending sensor.

20. Bicycle according to any of claims 12-19, wherein a signal input of the control member (40) is connected to the said bending sensor (50) in order to receive the measurement signal (S2) generated thereby; and wherein the control member (40) is designed to control the activation of the motor (45) on the basis of the measurement signal (S2) received from said sensor (50).

21. Modular system for measuring a driving force in a chain of a bicycle, which system is designed to supply an electrical signal representative of said driving force, said system comprising:
- a driven wheel axle (6) which is provided with a bending sensor (50) which generates a measurement signal (S2) which is representative of a bending of the axle (6);
- a hub (24) rotatably mounted on said axle (6);
- a hub motor (45) associated with said axle (6).

22. Modular system according to claim 21, the modular system further comprising:
- a control member (40) mounted on said axle (6) and having a signal input connected to the said sensor (50) in order to receive the measurement signal (S2) generated thereby, said control member (40) being designed for controlling the activation of the motor (45) on the basis of the measurement signal (S2) received from said sensor (50).

23. Modular system according to claim 21 or 22, wherein the hub motor (45) is mounted on said axle (6).

24. Modular system according to any of claims 21-23, the axle (6) being provided with a sensor-carrying part (51), and the sensor (50) being mounted on said sensor carrying part (51).

## Patentansprüche

1. Verfahren zum Steuern eines Hilfsmotors eines Fahrrades, wobei der Motor ein Nabenmotor (45) ist und der Motor (45) mit der Achse (6) eines angetriebenen Rads (21) des Fahrrades (1) verbunden ist, wobei ein Steuersignal in Übereinstimmung mit einer vorbestimmten Kenngröße auf der Basis eines Messsignals festgelegt wird, welches repräsentativ für die Höhe einer Pedalkraft (Fp) ist, die von einem Fahrer eines Fahrrades ausgeübt wird, und wobei das Messignal bereitgestellt wird durch:
ein Verfahren zum Bereitstellen eines Messsignals, welches repräsentativ für die Höhe einer Pedalkraft (Fp) ist, die von einem Fahrer des Fahrrades (1) ausgeübt wird, wobei die Biegung gemessen wird, die durch diese Kraft in der Achse (6), an der ein angetriebenes Rad (21) befestigt ist, verursacht wird, wobei die Biegung in einer Ebene gemessen wird, die im Wesentlichen parallel zu der Antriebskraft (Fk) ist, die auf das angetriebene Rad (21) durch eine Kette (28) ausgeübt wird, wobei ein von dieser Kette (28) angetriebenes Kettenrad an der Achse (6) befestigt ist, wobei ein Biegungssensor (50) an dieser Achse (6) befestigt ist und wobei die in der Kette (28) vorherrschende Antriebskraft (Fk) von dem momentanen Wert des Messsignals (S2), das durch den Sensor erzeugt wird, abgeleitet wird.

2. Verfahren nach Anspruch 1, wobei der Nabenmotor einen an der Achse (6) befestigten ersten Ausgang (45A) und einen an einer Nabe (24) befestigten zweiten Ausgang (45B) aufweist und die Ausgänge angetrieben werden können, um in Bezug zueinander zu rotieren.

3. Verfahren nach einem der vorstehenden Ansprüche, wobei eine Signalverarbeitungseinheit (40) eine Pedalgeschwindigkeit aus der zyklischen Art des Messsignals berechnet.

4. Verfahren zum Steuern eines Hilfsmotors eines Fahrrades, wobei der Motor ein Nabenmotor (45) ist und der Motor (45) mit der Achse (6) eines angetriebenen Rads (21) des Fahrrades verbunden ist, wobei ein Steuersignal in Übereinstimmung mit einer vorbestimmten Kenngröße auf der Basis eines Messsignals festgelegt wird, welches repräsentativ für die Höhe einer Pedalkraft (Fp) ist, die von einem Fahrer eines Fahrrades ausgeübt wird, und wobei das Messignal bereitgestellt wird durch:
ein Verfahren zum Messen einer Kraft (Fk) in einem im Wesentlichen linearen Übertragungselement (28), das um zwei drehende Übersetzungselemente (2, 5) des Fahrrades angelegt ist, umfassend das Messen von den in einem Lager des angetriebenen Rads (21) auftretenden Kräften in einer Ebene, die im Wesentlichen parallel zu der Kraft (Fk) ist, wobei mindestens eines der Übersetzungselemente in Bezug auf einen Rahmen (10) drehbar durch Lagermittel (70) befestigt ist, wobei mindestens eines dieser Lager mit einem eingebauten Sensor (74) versehen ist und wobei die in dem Übertragungselement (28) herrschende Kraft (Fk) von dem von dem Sensor erzeugten Messsignal (S1; S4) abgeleitet wird.

5. Verfahren nach Anspruch 4, wobei der Nabenmotor einen an einer Achse (6) befestigten ersten Ausgang (45A) und einen an einer Nabe (24) befestigten zweiten Ausgang (45B) aufweist und die Ausgänge angetrieben werden können, um in Bezug zueinander zu rotieren.

6. Fahrrad (1) bestehend aus:
einem Rahmen (10);
einem angetriebenen Rad (21), das eine Radnabe (24) umfasst, die über Radlager an einer Achse (6) befestigt ist, die an dem Rahmen (10) befestigt ist;
einem an der Radnabe (24) befestigten drehbaren Kettenrad (5) und einer zumindest teilweise um das Kettenrad (5) anliegenden Kette (28), **dadurch gekennzeichnet, dass** ein elektrischer Nabenmotor (45) mit der Achse (6) verbunden ist und dass die Achse (6) mit einem mit einem Biegungssensor (50) versehen ist, der ein Messsignal (S2), welches repräsentativ für die Biegung der Achse (6) ist, erzeugt.

7. Fahrrad nach Anspruch 6, wobei die Achse (6) mit dem daran befestigten Sensor (50) in solch einer Weise mit Bezug auf den Rahmen (10) befestigt ist, dass der Sensor (50) durch Kräfte, die parallel zu der Antriebskraft (Fk) in der Kette (28) ausgerichtet sind, erregbar ist und im Wesentlichen durch Kraftkomponenten, die rechtwinklig hierzu ausgerichtet sind, nicht erregbar ist.

8. Fahrrad nach Anspruch 7, wobei die Achse (6) mit einem Sensortrageteil (51) versehen ist, dessen Biegefestigkeit geringer als die Biegefestigkeit der angrenzenden Achsabschnitte ist, und wobei der Sensor (5) an dem Sensortrageteil (51) befestigt ist.

9. Fahrrad nach einem der Ansprüche 6 bis 8, wobei der Nabenmotor (45) im Innern der Radnabe (24) untergebracht ist und der Nabenmotor (45) an der Achse (6) angeordnet ist.

10. Fahrrad nach Anspruch 9, wobei der Nabenmotor einen an der Achse (6) befestigten ersten Ausgang (45A) und einen an der Nabe (24) befestigten zweiten Ausgang (45B) aufweist und die Ausgänge angetrieben werden können, um in Bezug zueinander zu rotieren.

11. Fahrrad nach einem der Ansprüche 6 bis 10, wobei der Biegungssensor im Innern der Radnabe (24) untergebracht ist.

12. Fahrrad nach einem der Ansprüche 6 bis 11, wobei der Elektromotor (45) von einem Steuerelement (40) gesteuert aktiviert wird.

13. Fahrrad nach Anspruch 12, wobei das Steuerelement (40) an der Achse (6) befestigt ist.

14. Fahrrad nach Anspruch 12 oder 13, wobei das Steuerelement (40) ausgelegt ist, um eine momentane Kettenkraft (Fk) auf der Grundlage eines momentanen Wertes des Messsignals (S2) unter Berücksichtigung fahrradspezifischer Umrechnungsfaktoren zu berechnen.

15. Fahrrad nach einem der Ansprüche 12 bis 14, wobei das Steuerelement (40) ausgelegt ist, um den Motor auf der Grundlage eines momentanen Wertes der Kettenkraft zu aktivieren.

16. Fahrrad nach Anspruch 12 oder 13, wobei das Steuerelement (40) ausgelegt ist, um den Motor auf der Grundlage eines bearbeiteten Wertes der Kettenkraft zu aktivieren.

17. Fahrrad nach einem der Ansprüche 12 bis 16, wobei das Messsignal (S2) des Biegungssensors (5) eine Signalkomponente beinhaltet, die eine Pedalfrequenz widerspiegelt, wobei das Steuerelement (40) ausgelegt ist, um eine Fahrradgeschwindigkeit auf der Grundlage der Pedalfrequenz unter Berücksichtigung fahrradspezifischer Umrechnungsfaktoren zu berechnen.

18. Fahrrad nach einem der Ansprüche 12 bis 17, wobei der Biegungssensor (50) und das Steuerelement (40) auf einem einzelnen Chip integriert sind.

19. Fahrrad nach einem der Ansprüche 12 bis 18, das weiterhin versehen ist mit einem automatisch schaltenden Beschleunigungssystem, welches ausgelegt ist, um ein vorbestimmtes Übersetzungsverhältnis in der Übersetzungslinie zwischen dem Kurbelsystem und dem angetriebenen Rad unter der Steuerung des Steuerelementes zu bewirken und wobei das Steuerelement ausgelegt ist, um ein Steuersignal für das automatisch schaltende Beschleunigungssystem auf der Basis des von dem Biegungssensor empfangenen Messsignals zu erzeugen.

20. Fahrrad nach einem der Ansprüche 12 bis 19, wobei ein Signaleingang des Steuerelements (40) mit dem Biegungssensor (50) verbunden ist, um das von diesem erzeugte Messsignal (S2) zu empfangen, wobei das Steuerelement (40) ausgelegt ist, um die Aktivierung des Motors (45) basierend auf dem von dem Sensor (50) empfangenen Messsignal (S2) zu steuern.

21. Modulares System zum Messen einer Antriebskraft in einer Kette eines Fahrrades, wobei das System ausgelegt ist, um ein für die Antriebskraft repräsentatives elektrisches Signal zu liefern, wobei das System umfasst:
- eine Achse (6) eines angetriebenen Rades, die mit einem Biegungssensor (50) versehen ist, der ein Messsignal (S2) erzeugt, das repräsentativ für eine Biegung der Achse (6) ist,
- eine drehbar an der Achse (6) befestigte Nabe (24),
- ein Nabenmotor (45), der mit der Achse (6) verbunden ist.

22. Modulares System nach Anspruch 21, ferner umfassend:
ein Steuerelement (40), das an der Achse (6) befestigt ist und einen mit dem Sensor (50) verbundenen Signaleingang aufweist, um das von diesem erzeugte Messignal (S2) zu empfangen, wobei das Steuerelement (40) ausgelegt ist, um die Aktivierung des Motors (45) basierend auf dem von dem Sensor (50) empfangenen Messsignal (S2) zu steuern.

23. Modulares System nach Anspruch 21 oder 22, wobei der Nabenmotor (45) an der Achse (6) befestigt ist.

24. Modulares System nach einem der Ansprüche 21 bis 23, wobei die Achse (6) mit einem Sensortrageteil (51) versehen ist und der Sensor (50) auf dem Sensortrageteil (51) befestigt ist.

## Revendications

1. Procédé de commande d'un moteur auxiliaire de bicyclette, dans lequel le moteur est un moteur de moyeu (45), le moteur (45) étant associé à l'axe (6) d'une roue motrice (21) de la bicyclette (1), dans lequel un signal de commande est déterminé selon une caractéristique prédéterminée, sur la base d'un signal de mesure qui est représentatif du niveau d'effort (Fp) exercé par un cycliste sur les pédales de la bicyclette, et dans lequel le signal de mesure est fourni par :
un procédé pour fournir un signal de mesure qui est représentatif du niveau d'effort (Fp) exercé par le cycliste sur les pédales de la bicyclette (1), dans lequel la flexion est mesurée, provoquée par cet effort, dans l'axe (6) sur lequel est montée une roue motrice (21), dans lequel la flexion est mesurée dans un plan qui est substantiellement parallèle à la force d'entraînement (Fk) exercée sur ladite roue motrice (21) par une chaîne (28), dans lequel un pignon entraîné par ladite chaîne (28) est monté sur ledit axe (6), dans lequel un capteur de flexion (50) est monté sur ledit axe (6), et dans lequel la force d'entraînement (Fk) qui prévaut dans ladite chaîne (28) est obtenue à partir de la valeur instantanée du signal de mesure (S2) généré par ledit capteur.

2. Procédé selon la revendication 1, dans lequel le moteur à moyeu a une première sortie (45A) fixée sur l'axe (6), et une deuxième sortie (45B) fixée sur un moyeu (24), lesquelles sorties peuvent être entraînées de manière à tourner l'une par rapport à l'autre.

3. Procédé selon l'une quelconque des revendications précédentes, dans lequel une unité de traitement du signal (40) calcule une vitesse de pédale à partir de la nature cyclique du signal de mesure.

4. Procédé de commande d'un moteur auxiliaire de bicyclette, dans lequel le moteur est un moteur de moyeu (45), le moteur (45) étant associé à l'axe (6) d'une roue motrice (21) de la bicyclette, dans lequel un signal de commande est déterminé selon une caractéristique prédéterminée, sur la base d'un signal de mesure qui est représentatif du niveau d'effort (Fp) exercé par un cycliste sur les pédales de la bicyclette, et dans lequel le signal de mesure est fourni par :
un procédé pour mesurer une force (Fk) dans un élément de transmission substantiellement linéaire (28) monté autour de deux éléments de transmission tournants (2, 5) de la bicyclette, comprenant la mesure des forces existant dans un roulement de la roue motrice (21) dans un plan qui est substantiellement parallèle à ladite forcé (Fk), dans lequel au moins l'un desdits éléments de transmission est monté à rotation au moyen de roulements (70) par rapport à un cadre (10), dans lequel au moins l'un desdits roulements est muni d'un capteur intégré (74), et dans lequel la force (Fk) qui prévaut dans l'élément de transmission (28) est obtenue à partir du signal de mesure (S1 ; S4) généré par ledit capteur.

5. Procédé selon la revendication 4, dans lequel le moteur de moyeu a une première sortie (45A) fixée à un axe (6), et une deuxième sortie (45B) fixée à un moyeu (24), lesquelles sorties peuvent être entraînées de manière à tourner l'une par rapport à l'autre.

6. Bicyclette (1) comprenant :
un cadre (10) ;
une roue motrice (21) comprenant un moyeu de roue (24) qui, par l'intermédiaire de roulements de roue, est montée sur un axe (6) qui est fixé au cadre (10) ;
un pignon rotatif (5) fixé audit moyeu de roue (24) ;
une chaîne (28) au moins partiellement montée autour dudit pignon (5) ;
**caractérisée en ce qu'**un moteur de moyeu électrique (45) est associé à l'axe (6), et **en ce que** ledit axe (6) est pourvu d'un capteur de flexion (50) qui génère un signal de mesure (S2) qui est représentatif d'une flexion de l'axe (6).

7. Bicyclette selon la revendication 6, dans laquelle l'axe (6) muni du capteur (50) est monté de telle manière par rapport au cadre (10) que ledit capteur (50) est sensible à des forces qui sont orientées parallèlement à la force d'entraînement (Fk) dans la chaîne (28) et est substantiellement insensible aux composantes de forces qui sont orientées perpendiculairement à celle-ci.

8. Bicyclette selon la revendication 7, dans laquelle l'axe (6) est pourvu d'une partie de support de capteur (51), dont la résistance à la flexion est inférieure à la résistance à la flexion des portions voisines de l'axe, et dans laquelle le capteur (5) est monté sur ladite partie de support de capteur (51).

9. Bicyclette selon l'une quelconque des revendications 6 à 8, dans laquelle le moteur de moyeu (45) est placé à l'intérieur du moyeu de roue (24), le moteur de moyeu (45) se mettant en prise sur l'axe (6).

10. Bicyclette selon la revendication 9, dans laquelle le moteur de moyeu a une première sortie (45A) fixée à l'axe (6), et une deuxième sortie (45B) fixée au moyeu (24), lesquelles sorties peuvent être entraînées de manière à tourner l'une par rapport à l'autre.

11. Bicyclette selon l'une quelconque des revendications 6 à 10, dans laquelle le capteur de flexion est placé à l'intérieur du moyeu de roue (24).

12. Bicyclette selon l'une quelconque des revendications 6 à 11, dans laquelle le moteur électrique (45) est activé sous la commande d'un élément de commande (40).

13. Bicyclette selon la revendication 12, dans laquelle l'élément de commande (40) est monté sur l'axe (6).

14. Bicyclette selon la revendication 12 ou 13, dans laquelle l'élément de commande (40) est conçu pour calculer une force de chaîne instantanée (Fk) en se basant sur une valeur instantanée du signal de mesure (S2), en prenant en compte des facteurs de conversion propres à la bicyclette.

15. Bicyclette selon l'une quelconque des revendications 12 à 14, dans laquelle l'élément de commande (40) est conçu pour activer le moteur en se basant sur une valeur instantanée de la force de chaîne.

16. Bicyclette selon la revendication 12 ou 13, dans laquelle l'élément de commande (40) est conçu pour activer le moteur en se basant sur une valeur traitée de la force de chaîne.

17. Bicyclette selon l'une quelconque des revendications 12 à 16, dans laquelle le signal de mesure (S2) provenant du capteur de flexion (5) contient une composante de signal qui reflète une fréquence de pédalage, dans laquelle l'élément de commande (40) est conçu pour calculer une vitesse de bicyclette en se basant sur la fréquence de pédalage, en prenant en compte des facteurs de conversion propres à la bicyclette.

18. Bicyclette selon l'une quelconque des revendications 12 à 17, dans laquelle ledit capteur de flexion (50) et ledit élément de commande (40) sont intégrés sur une seule puce.

19. Bicyclette selon l'une quelconque des revendications 12 à 18, pourvue en outre d'un système d'accélération à commutation automatique qui est conçu pour donner un rapport de transmission prédéterminé à la ligne de transmission entre le pédalier et une roue motrice sous la commande de l'élément de commande, et dans laquelle l'élément de commande est conçu pour générer un signal de commande pour le système d'accélération à commutation automatique d'après le signal de mesure transmis par le capteur de flexion.

20. Bicyclette selon l'une quelconque des revendications 12 à 19, dans laquelle une entrée de signal de l'élément de commande (40) est connectée audit capteur de flexion (50) afin de recevoir le signal de mesure (S2) généré par celui-ci, et dans laquelle l'élément de commande (40) est conçu pour commander l'activation du moteur (45) en se basant sur le signal de mesure (S2) transmis par ledit capteur (50).

21. Système modulaire pour mesurer une force d'entraînement dans une chaîne de bicyclette, lequel système est conçu pour fournir un signal électrique représentatif de ladite force d'entraînement, ledit système comprenant :
- un axe de roue motrice (6) qui est muni d'un capteur de flexion (50) qui génère un signal de mesure (S2) qui est représentatif d'une flexion de l'axe (6) ;
- un moyeu (24) monté à rotation sur ledit axe (6) ;
- un moteur de moyeu (45) associé audit axe (6).

22. Système modulaire selon la revendication 21, le système modulaire comprenant en outre :
- un élément de commande (40) monté sur ledit axe (6) et ayant une entrée de signal connectée audit capteur (50) afin de recevoir le signal de mesure (S2) généré par celui-ci, ledit élément de commande (40) étant conçu pour commander l'activation du moteur (45) en se basant sur le signal de mesure (S2) transmis par le capteur (50).

23. Système modulaire selon la revendication 21 ou 22, dans lequel le moteur de moyeu (45) est monté sur ledit axe (6).

24. Système modulaire selon l'une quelconque des revendications 21 à 23, dans lequel l'axe (6) est pourvu d'une partie de support de capteur (51), et le capteur (50) est monté sur ladite partie de support de capteur (51).
